# EUROPÄISCHE PATENTSCHRIFT

(11) **EP 3 812 598 B1**
(45) Veröffentlichungstag und Bekanntmachung des Hinweises auf die Patenterteilung: **22.09.2021**
(21) Anmeldenummer: 19205313.0
(22) Anmeldetag: 25.10.2019
(51) Int. Cl.: F16B 13/00, G06K 19/04, G06K 19/07

(54) **IDENTIFIKATIONSELEMENT FÜR EIN SCHAFTWERKZEUG**
IDENTIFICATION ELEMENT FOR A SHAFT TOOL
ÉLÉMENT D'IDENTIFICATION D'UN OUTIL À ARBRE

(43) Veröffentlichungstag der Anmeldung: 28.04.2021
(73) Patentinhaber: Balluff GmbH, 73765 Neuhausen a.d.F. (DE)
(72) Erfinder: Stabel, Eberhard, 70599 Stuttgart (DE); Beutler, Robert, 73770 Denkendorf (DE)
(74) Vertreter: Jakelski & Althoff Patentanwälte PartG mbB

(56) Entgegenhaltungen:
- WO-A1-2016/116080
- CN-U- 203 311 454
- US-A1- 2005 189 408

## Beschreibung

Die vorliegende Erfindung betrifft ein Identifikationselement für ein Schaftwerkzeug. Weiterhin betrifft sie ein Schaftwerkzeug, welches das Identifikationselement aufweist.

### Stand der Technik

Aufsteckbare und wiederabnehmbare Identifikationselemente für spanende Schaftwerkzeuge, insbesondere Bohrer oder Schaftfräser, welche einen Identifikator zum Identifizieren von Schaftwerkzeugen aufweisen, sind bekannt. Solche Identifikationselemente können auf den Schaft eines Schaftwerkzeugs aufgesteckt und von dem Schaft des Schaftwerkzeugs wieder abgenommen werden. Wenn ein solches Identifikationselement auf ein Schaftwerkzeug aufgesteckt ist, ermöglicht es die Identifikation des entsprechenden Schaftwerkzeugs. Ein Beispiel eines solchen Identifikationselements, welches an Schaftwerkzeugen wie zum Beispiel Bohrern angebracht werden kann, ist in der WO 2014/028462 A1 beschrieben. Das dort beschriebene Identifikationselement umfasst einen RFID-Transponder (radio-frequency identification) mit einem digitalen, kennzeichnenden Code als Identifikator. Weiter umfasst dieses Identifikationselement einen Kern aus Metall und einen Deckel aus Plastik, welcher den Kern und den RFID-Transponder umschließt. Dabei weist der Kern auf seiner Mantelfläche mehrere Rillen auf, welche mit Vorsprüngen am Deckel zusammenwirken, um diesen am Kern zu halten. Weiter kann der Deckel aber auch mit Klebstoff am Kern gehalten werden. Dieses Identifikationselement kann auf den Schaft des Bohrers aufgesteckt und in Axialrichtung des Bohrers festgesetzt werden, indem es mit einer Madenschraube, welche in den Kern eingeschraubt wird, festgeschraubt wird.

Derartige Identifikationselemente haben den Nachteil, dass ihr Aufstecken auf den Schaft des Schaftwerkzeugs aufwändig ist und sie die Funktion des Schaftwerkzeugs, auf welches sie aufgesteckt sind, nachhaltig stören und beeinträchtigen. So wird durch ihr Aufbringen mittels der Madenschraube der Schaft des Schaftwerkzeugs geschwächt, wodurch die Wahrscheinlichkeit eines Werkzeugbruchs erhöht ist. Weiter erzeugen derartige Identifikationselemente aufgrund ihres hohen Gewichts bei rotierendem Betrieb des Schaftwerkzeugs schon bei kleinen Fehlern in ihrer Austarierung eine starke Unwucht des Schaftwerkzeugs, was zu einer exzentrischen Rotationsbewegung des Schaftwerkzeugs führt. Aufgrund dieser exzentrischen Rotationsbewegung können einerseits keine sauberen Oberflächen beim zu bearbeitenden Werkstück erzeugt werden. Andererseits wird durch die exzentrischen Rotationsbewegungen das Schaftwerkzeug sehr rasch beschädigt, indem die Schneiden des Schaftwerkzeugs deutlich rascher abgenutzt werden und indem die Wahrscheinlichkeit eines Werkzeugbruchs zunimmt.

Die US 2005/0189408 A1 wird als nächstliegender Stand der Technik gesehen und betrifft einen Dichtring für Rohrleitungen. Der Dichtring weist einen ersten Abschnitt und einen zweiten Abschnitt auf. Der zweite Abschnitt besteht aus einem synthetischen Gummi.

In der WO 2016/116080 A1 wird ein Spannbolzen mit integriertem RFID-Transponder beschrieben. Jener weist eine entlang seiner Längsachse durchgehende Öffnung auf, in welche eine Schraube eingeführt werden kann.

Der Spannbolzen weist einen Aufsatz auf, welcher einen ringförmigen Aufnahmebereich für einen RFID-Transponder aufweist. Der Aufsatz besteht aus Polyamid 6, dass zu 30 % mit Glasfasern gefüllt ist.

Aus der CN 203 311 454 U ist ein mehrlagiges Band mit eingebettetem RFID-Tag bekannt, welches dazu vorgesehen ist, um ein Metallrohr gewickelt zu werden.

Eine Aufgabe der vorliegenden Erfindung besteht darin, ein Identifikationselement für ein Schaftwerkzeug bereitzustellen, welches einfach auf den Schaft des Schaftwerkzeugs aufgesteckt werden kann und die Funktion des Schaftwerkzeugs nicht signifikant stört oder beeinträchtigt. Eine weitere Aufgabe der Erfindung besteht darin, ein Schaftwerkzeug bereitzustellen, welches das Identifikationselement aufweist.

### Offenbarung der Erfindung

Eine dieser Aufgaben wird in einem Aspekt der Erfindung durch ein Identifikationselement für ein Schaftwerkzeug gemäß dem Anspruch 1 gelöst, welches einen elastischen Innenring und einen Außenring aufweist. Der Außenring ist um den Innenring herum angeordnet. In dem Außenring ist eine ringförmige Ausnehmung gebildet, in der ein RFID-Transponder angeordnet ist. Das Identifikationselement ist also zweiteilig ausgeführt.

Der Innenring dient zur Kontaktierung des Identifikationselements mit dem Schaftwerkzeug. Er ist elastisch ausgeführt, um es zu ermöglichen das Identifikationselement einerseits über ein Schaft des Schaftwerkzeugs zu schieben und es andererseits im Betrieb des Schaftwerkzeugs an seiner Position festzuhalten. Die Elastizität kann auf verschiedene Weisen erreicht werden. Grundsätzlich ist es möglich, dass der Innenring aus einem Material gefertigt ist, das selbst nicht elastisch ist. Hierzu kann er beispielsweise aus mehreren nicht elastischen Teilen bestehen, die elastisch miteinander verbunden sind.

Es wäre ebenfalls möglich, dass es sich bei dem Innenring um ein gestanztes oder additiv hergestelltes Federelement handelt, dass aus einem Metall besteht. Bevorzugt basiert die Elastizität jedoch auf dem verwendeten Material. Hierzu besteht das Identifikationselement vorzugsweise aus einem Material mit einem Elastizitätsmodul von maximal 1 GPa. Besonders bevorzugt beträgt das Elastizitätsmodul maximal 500 MPa und ganz besonders bevorzugt maximal 100 MPa. Das Elastizitätsmodul kann im Zugversuch gemäß der Norm DIN EN ISO 527-1 ermittelt werden. Bei dem Material des Innenrings handelt es sich vorzugsweise um ein Elastomer. Da spanende Schaftwerkzeuge sich in der industriellen Fertigung typischerweise auf eine Betriebstemperatur von 90° C erhitzen, ist es bevorzugt, dass die Glasübergangstemperatur des Materials, aus dem der Innenring besteht, weniger als 90° C beträgt. Besonders bevorzugt beträgt sie weniger als 20° C, um so ein Verspröden des Innenrings bei Raumtemperatur zu verhindern.

Die Shorehärte des Innenrings beträgt vorzugsweise mindestens 65 A. Sie kann gemäß der Norm DIN ISO 7619-1:2012-02 ermittelt werden.

Ein Innendurchmesser des Innenrings beträgt vorzugsweise mindestens 6 mm. Auf diese Weise ist er groß genug, um den Schaft typischerweise industriell verwendeter Schaftwerkzeuge zu umschließen. Innenringe mit geringerem Innendurchmesser und dazu passende Außenringe mit entsprechend geringem Durchmesser wären so fragil, dass sie den mechanischen Belastungen im industriellen Einsatz von Schaftwerkzeugen möglicherweise nicht standhalten könnten.

Der Außenmantel des Innenrings weist entlang seiner Längsachse ein erstes Ende und ein zweites Ende auf. An dem ersten Ende des Außenmantels befindet sich ein Anschlag, der von dem Außenmantel vorspringt. Vorzugsweise springt er um mindestens 1,0 mm vor. Der Anschlag verhindert, dass der Außenring über das erste Ende des Innenrings hinweg bewegt wird und sichert den Außenring auf diese Weise am Innenring.

Der Anschlag ist ringförmig ausgebildet und läuft somit vollständig um den Außenmantel des Innenrings um. Der Anschlag dient nicht nur dazu, eine Bewegung des Außenrings relativ zum Innenring zu begrenzen, sondern schafft zusätzlich eine Abdichtung durch die verhindert wird, dass ein Kühlmittel oder Schmiermittel des Schaftwerkzeugs zwischen den Innenring und den Außenring gelangt.

An dem zweiten Ende des Innenrings ist ein ringförmiger Haltebereich am Außenmantel angeordnet. Ebenso wie der Anschlag springt auch der Haltebereich von dem Außenmantel vor. Allerdings springt der Haltebereich weniger weit vor als der Anschlag. Vorzugsweise springt er maximal um 0,5 mm vor.

Während der Anschlag eine Bewegung des Außenrings entlang des Innenrings in Richtung des ersten Endes begrenzt, begrenzt der Haltebereich eine Bewegung des Außenrings entlang des Innenrings in Richtung des zweiten Endes. Der Innenring und der Außenring sind demnach in dem Identifikationselement vorzugsweise so angeordnet, dass ein Innenmantel des Außenrings zwischen dem Anschlag und dem Haltbereich angeordnet ist. Während der Anschlag allerdings soweit vorspringt, dass er ein Bewegen des Außenrings über das erste Ende hinweg verhindert, wird eine Bewegung des Außenrings über das zweite Ende hinweg durch den weniger weit vorspringenden Haltebereich lediglich erschwert. Da der Haltebereich genauso wie der übrige Innenring elastisch ist, kann er unter Krafteinwirkung komprimiert werden. Dies ermöglicht es beim Zusammenbauen des Identifikationselements den Außenring unter Komprimierung des Haltebereichs über den Innenring zu schieben bis der Haltebereich schließlich in seine ursprüngliche Form zurück kehrt und der Außenring zwischen dem Anschlag und dem Haltebereich einrastet.

Beispielsweise dann, wenn das Schaftwerkzeug nachgeschliffen werden soll, kann es erforderlich sein das Identifikationselement vorübergehend vom Schaft des Schaftwerkzeugs zu entfernen. Wenn der Innenring hierbei über die Schneide des Schaftwerkzeugs geschoben wird, kann es zu einer Beschädigung des Innenrings kommen. Dies kann auch beim erstmaligen oder beim erneuten Aufbringen des Identifikationselements auf dem Schaft geschehen. Zudem ist der Innenring im Betrieb des Schaftwerkzeugs Kühlmitteln und Schmiermitteln ausgesetzt, die das Material des Innenrings langfristig schädigen können. Dadurch ist es möglich, dass der Innenring über die Lebensdauer des Schaftwerkzeugs so stark beschädigt wird, dass er das Identifikationselement nicht mehr sicher am Schaftwerkzeug hält. In diesem Fall ist es jedoch nicht erforderlich das gesamte Identifikationselement auszutauschen. Stattdessen kann der Innenring vom Außenring getrennt werden, indem der Haltebereich erneut komprimiert wird und der Außenring über das zweite Ende des Innenrings von diesem heruntergeschoben wird. Danach kann ein neuer Innenring in den Außenring hineingeschoben werden. Der Austausch lediglich des Innenrings ist vorteilhaft, da der Außenring den RFID-Transponder enthält. Zum einen wird so der unnötige Austausch eines teuren elektronischen Bauteils verhindert und zum anderen wird so sichergestellt, dass einem Schaftwerkzeug über seine gesamte Lebensdauer derselbe RFID-Transponder zugeordnet ist, sodass es sicher identifiziert werden kann.

Der Innenmantel des Außenrings weist vorzugsweise mehrere Vorsprünge auf. Während der Anschlag und der Haltebereich verhindern, dass sich der Außenring entlang der Längsachse des Identifikationselements bewegt, kann ein Verdrehen des Außenrings um den Innenring durch die Vorsprünge erschwert oder verhindert werden. Hierzu ist insbesondere eine Wellenstruktur, eine Rippenstruktur oder eine Zahnstruktur der Vorsprünge bevorzugt. Diese kann so ausgebildet sein, dass die Wellen, Rippen oder Zähne entlang der Längsachse des Außenrings verlaufen. Dadurch wird das Anbringen des Außenrings am Innenring und das Entfernen des Außenrings vom Innenring nicht erschwert. Hierzu werden der Außenring und der Innenring nämlich entlang ihrer gemeinsamen Längsachse relativ zueinander verschoben, sodass diese Bewegung entlang den Wellen, Rippen oder Zähnen erfolgt. Ein Verdrehen des Innenrings relativ zum Außenring würde jedoch quer zu den Wellen, Rippen oder Zähnen erfolgen. Aufgrund der Elastizität des Innenrings würde die Bewegung der Wellen, Rippen oder Zähne über den Außenmantel des Innenrings diesen ständig punktuell komprimieren und wieder dekomprimieren, was eine sehr hohe Reibung zwischen dem Außenring und dem Innenring bewirken würde. Der Außenring besteht vorzugsweise aus einem thermoplastischen Material. Dieses hat den Vorteil, dass es die Herstellung des Außenrings in einem Spritzgussverfahren ermöglicht. Dadurch kann dieser in einfacher Weise mit der Ausnehmung und gegebenenfalls mit den Vorsprüngen gefertigt werden. Angesichts einer typischen Arbeitstemperatur von Schaftwerkzeugen im industriellen Einsatz von 90° C, beträgt die Erweichungstemperatur des thermoplastischen Materials vorzugsweise mindestens 100° C.

Besonders bevorzugte thermoplastische Materialien zur Fertigung des Außenrings sind Polyphenylensulfid (PPS) und flüssigkristalline Polymere (LCP), wobei die flüssigkristallinen Polymere ganz besonders bevorzugt sind. Diese Polymere ermöglichen die Fertigung eines stabilen Außenrings auch mit einer sehr geringen Wandstärke. Die Wandstärke beträgt insbesondere weniger als 0,5 mm und ermöglicht so eine sehr leichte Ausführung des Außenrings.

Auch wenn es sich beispielsweise bei LCP um einen selbstverstärkenden Kunststoff handelt, kann zur weiteren Verstärkung des Außenrings gegenüber mechanischen Belastungen vorgesehen sein, dass es sich bei seinem Material um einen glasfaserverstärkten Kunststoff handelt. Der Gewichtsanteil von Glasfasern an dem glasfaserverstärkten Kunststoff beträgt dabei bevorzugt mehr als 5 Gew.-%, besonders bevorzugt mehr als 10 Gew.-%.

Der RFID-Transponder weist vorzugsweise eine ringförmige Antenne auf, die in der Ausnehmung angeordnet ist. Durch die ringförmig umlaufende Anordnung der Antenne wird verhindert, dass diese eine Unwucht im Identifikationselement verursachen kann. Auch wenn der RFID-Transponder selbst das Gewicht des Außenrings an seiner Position punktuell erhöht, so ist dieses Gewicht doch so gering, dass das Identifikationselement in der besten Wuchtklasse gefertigt werden kann.

Um den RFID-Transponder und die Antenne sicher in der Ausnehmung zu fixieren und vor mechanischer Beschädigung zu schützen, ist es bevorzugt, dass eine Füllmasse in der Ausnehmung angeordnet ist, welche den RFID-Transponder und die Antenne umschließt. Bei der Füllmasse kann es sich insbesondere um eine Polyurethanvergussmasse handeln. Die Füllmasse wird vorzugsweise so in der Ausnehmung angeordnet, dass sie diese vollständig füllt.

Ein weiterer Aspekt der Erfindung betrifft ein Schaftwerkzeug, welches das Identifikationselement gemäß dem Anspruch 1 aufweist. Der Innenring des Identifikationselements umschließt dabei einen Schaft des Schaftwerkzeugs. Um sicherzustellen, dass bei einem eventuellen Entfernen des Identifikationselements vom Schaftwerkzeug, beispielsweise zum Zwecke des Nachschleifens, das richtige Identifikationselement wieder an das Schaftwerkzeug angebracht wird, ist es bevorzugt, dass sowohl das Identifikationselement als auch das Schaftwerkzeug jeweils eine visuelle Markierung aufweisen. Visuelle Markierungen auf Schaftwerkzeugen sind heute bereits bekannt, um diese individuell zu identifizieren. Hierzu wird beispielsweise ein 3D-Code oder Data-Matrix-Code in das Schaftwerkzeug eingelasert. Dieser wird im Betrieb des Schaftwerkzeugs jedoch leicht durch mechanische Einwirkung abgetragen, sodass etwa dann, wenn ein Nachschleifen des Schaftwerkzeugs erforderlich wird eine sichere Identifikation nicht mehr möglich ist. Um ein solches Abtragen des visuellen Merkmals auf dem Schaftwerkzeug zu verhindern, ist es deshalb bevorzugt, dass das Identifikationselement so auf dem Schaftwerkzeug angeordnet ist, dass der Innenring das visuelle Merkmal bedeckt. Solange das Identifikationselement auf dem Schaftwerkzeug angebracht ist, ist ein Auslesen des visuellen Merkmals auf dem Schaftwerkzeug zwar nicht möglich, jedoch auch nicht erforderlich. Die Identifikation des Schaftwerkzeugs kann in diesem Fall nämlich mittels des RFID-Transponders erfolgen. Ein kennzeichnender Code, der mittels des RFID-Transponders digital aus dem Identifikationselement ausgelesen werden kann hat zudem den Vorteil, dass eine Automatisierung des Betriebs einer programmierbaren Werkzeugmaschine erleichtert wird, in welcher das Schaftwerkzeug eingesetzt wird. Werden Schaftwerkzeug und Identifikationselement voneinander getrennt, so ist das visuelle Merkmal auf dem Schaftwerkzeug wieder lesbar, sodass es zu einem späteren Zeitpunkt eindeutig seinem Identifikationselement zugeordnet werden kann.

Das Identifikationselement wird vorzugsweise so an dem Schaftwerkzeug angebracht, dass der Anschlag des Innenrings auf einer einem Werkzeugkopf zugewandten Seite des Identifikationselements angeordnet ist. Hierdurch kann der Anschlag eine abdichtende Funktion erfüllen und auf diese Weise verhindern, dass Kühlmittel und Schmiermittel im Betrieb des Schaftwerkzeugs zwischen den Innenring und dem Außenring gelangt. Eine vollständige Abdichtung wird vorzugsweise dann erzielt, wenn der Anschlag ringförmig ausgeführt ist.

Es ist weiterhin bevorzugt, dass der Anschlag des Innenrings eine visuelle Markierung des Identifikationselements bedeckt, welche auf dem Außenring angebracht ist. Auf diese Weise kann die visuelle Markierung vor Spanflug geschützt werden. Wenn der Innenring und der Außenring voneinander getrennt werden, dann wird die visuelle Markierung wieder sichtbar.

### Kurze Beschreibung der Zeichnungen

Ausführungsbeispiele der Erfindung sind in den Zeichnungen dargestellt und werden in der nachfolgenden Beschreibung näher erläutert.
Figur 1a zeigt eine isometrische Darstellung eines Innenrings eines Identifikationselements gemäß einem Ausführungsbeispiel der Erfindung.
Figur 1b zeigt eine andere isometrische Darstellung des Innenrings gemäß Figur 1a.
Figur 2a zeigt eine isometrische Darstellung eines Innenrings eines Identifikationselements gemäß einem anderen Ausführungsbeispiel der Erfindung.
Figur 2b zeigt eine andere isometrische Darstellung des Innenrings gemäß Figur 2a.
Figur 3a zeigt eine isometrische Darstellung eines Außenrings eines Identifikationselements gemäß einem Ausführungsbeispiel der Erfindung.
Figur 3b zeigt eine Ansicht des Außenrings gemäß Figur 3a von seiner Unterseite.
Figur 4a zeigt in einer Aufsicht wie ein RFID-Transponder und eine Antenne in dem Außenring gemäß Figur 3 angeordnet sind.
Figur 4b zeigt eine Schnittdarstellung gemäß der Linie IVb-IVb in Figur 4a.
Figur 5a zeigt eine isometrische Darstellung des Außenrings gemäß den Figuren 3, 4a und 4b dessen Ausnehmung mit einem Füllmaterial gefüllt wurde.
Figur 5b zeigt eine Schnittdarstellung des Außenrings gemäß Figur 5a.
Figur 6 zeigt eine isometrische Darstellung eines Identifikationselements gemäß einem Ausführungsbeispiel der Erfindung.
Figur 7 zeigt eine isometrische Darstellung eines Schaftwerkzeugs gemäß dem Stand der Technik.
Figur 8a zeigt eine isometrische Darstellung eines Schaftwerkzeugs gemäß einem Ausführungsbeispiel der Erfindung.
Figur 8b zeigt eine andere isometrische Darstellung des Schaftwerkzeugs gemäß Figur 8a.

### Ausführungsbeispiele der Erfindung

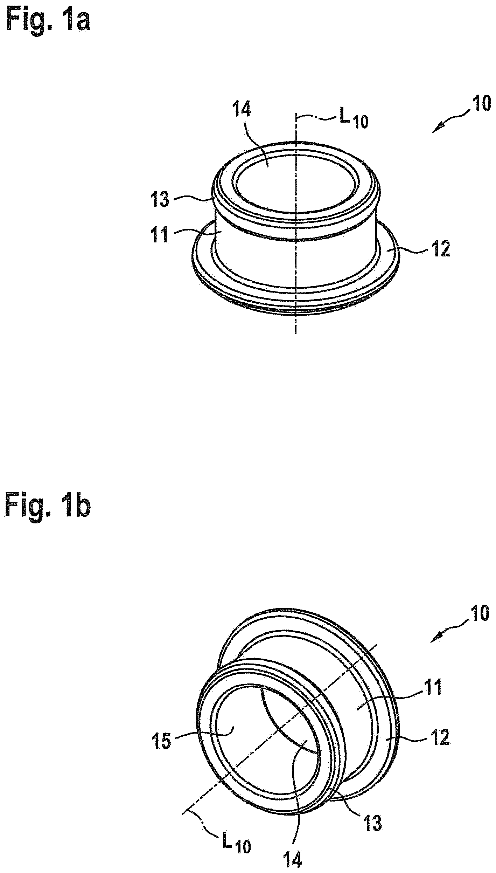

Ein Innenring 10, der in einem ersten Ausführungsbeispiel des erfindungsgemäßen Identifikationselements Verwendung findet, ist in den Figuren 1a und 1b dargestellt. Er besteht im vorliegenden Ausführungsbeispiel aus dem Elastomer Elastollan® C 70 A HPM (BASF), das eine Shorehärte von 70 A aufweist. Er weist einen Außenmantel 11 auf von dem an seinem einen Ende ein Anschlag 12 vorspringt und an seinem anderen Ende ein Haltebereich 13 vorspringt. Der Anschlag 12 und der Haltebereich 13 liegen sich entlang einer Längsachse L₁₀ des Innenrings 10 gegenüber. Eine Öffnung 14 des Innenrings wird von seinem Innenmantel 15 umgeben. Sein Innendurchmesser beträgt 6 mm und seine Wandstärke beträgt 1,075 mm, sodass sich ein Außendurchmesser von 8,15 mm ergibt. Der Anschlag 12 springt um 1,2 mm von dem Außenmantel 11 vor und der Haltebereich 13 springt um 0,2 mm von dem Außenmantel 11 vor. Der Innenring 10 hat entlang seiner Längsachse L₁₀ eine Länge von 5 mm, wobei der Bereich des Außenmantels 11, der zwischen dem Anschlag 12 und dem Haltebereich 13 liegt, eine Länge von 3 mm aufweist.

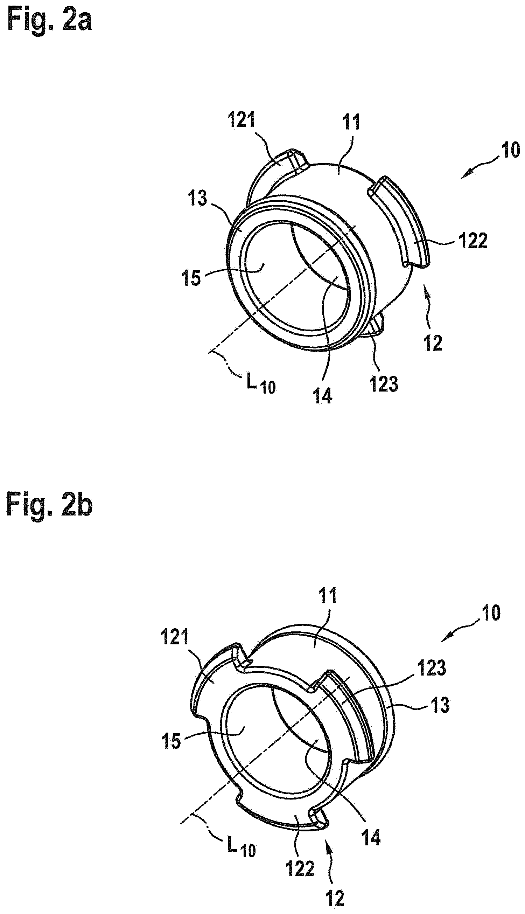

Ein Innenring 10, der in einem zweiten Ausführungsbeispiel des Identifikationselements verwendet wird, ist in den Figuren 2a und 2b dargestellt. Dieser unterscheidet sich von dem Innenring 10 gemäß den Figuren 1a und 1b dadurch, dass der Anschlag 12 nicht ringförmig um den Außenmantel 11 umläuft. Stattdessen besteht er aus drei Anschlagsbereichen 121, 122, 123, die jeweils einen Bereich von 60° des Kreisumfangs des Außenmantels 11 abdecken und symmetrisch um diesen angeordnet sind.

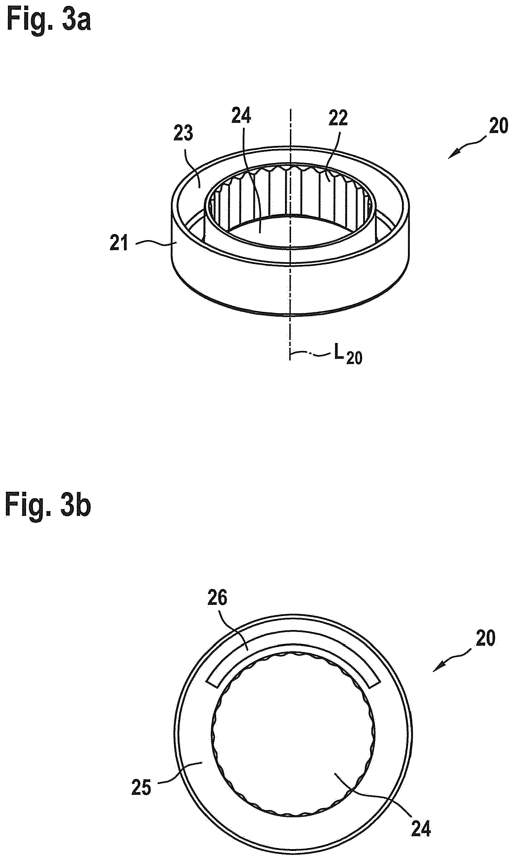

Ein Außenring 20, der in Ausführungsbeispielen des Identifikationselements wahlweise mit dem Innenring gemäß den Figuren 1a und 1b oder mit dem Innenring gemäß den Figuren 2a und 2b kombiniert werden kann, ist in den Figuren 3a und 3b dargestellt. Er besteht im vorliegenden Ausführungsbeispiel aus LCP mit einem Glasfaseranteil von 15 Gew.-%. Der Außendurchmesser seines Außenmantels 21 beträgt 12 mm. Sein Innenmantel 22 weist eine Sinuswellenstruktur auf, deren Amplitude so gewählt ist, dass sein Innendurchmesser zwischen 8,0 mm und 8,2 mm variiert. Eine Ausnehmung 23 läuft ringförmig so um den Außenring 20 um, dass sie entlang seiner Längsachse L₂₀ an einem Ende des Außenrings 20 offen ist und an dem anderen Ende geschlossen ist. An ihrer Außenseite wird Sie durch den Außenmantel 21 begrenzt, der eine Wandstärke von 0,6 mm aufweist. An ihrer Unterseite wird die Ausnehmung 23 durch einen Boden 25 des Außenrings 20 begrenzt. Der Boden 25 trägt an seiner von der Ausnehmung 23 abgewandten Seite eine visuelle Markierung 26. Diese ist in der Nähe einer Öffnung 24 des Außenrings 20 angebracht. Die Länge des Außenrings 20 beträgt 3 mm und entspricht somit der Länge des Außenmantels 11 der Innenringe zwischen ihrem jeweiligen Anschlag 12 und ihrem Haltebereich 13. Jeder der Innenringe 10 kann deshalb so in die Öffnung 24 des Außenrings 20 eingeführt werden, dass der Außenring 20 zwischen dem Anschlag 12 und dem Haltebereich 13 einrastet.

Da der Außendurchmesser jedes Innenrings 10 größer ist als der minimale Innendurchmesser des Außenrings 20, aber kleiner als der maximale Innendurchmesser des Außenrings 20, wird der Außenmantel 11 des Innenrings 10 nur teilweise durch die Wellenstruktur des Innenmantels 22 des Außenrings 20 verformt. Dies ermöglicht ein einfaches Anbringen und Entfernen des Außenrings 20 am Innenring 10 erschwert jedoch ein Verdrehen des Außenrings 20 gegenüber dem Innenring 10.

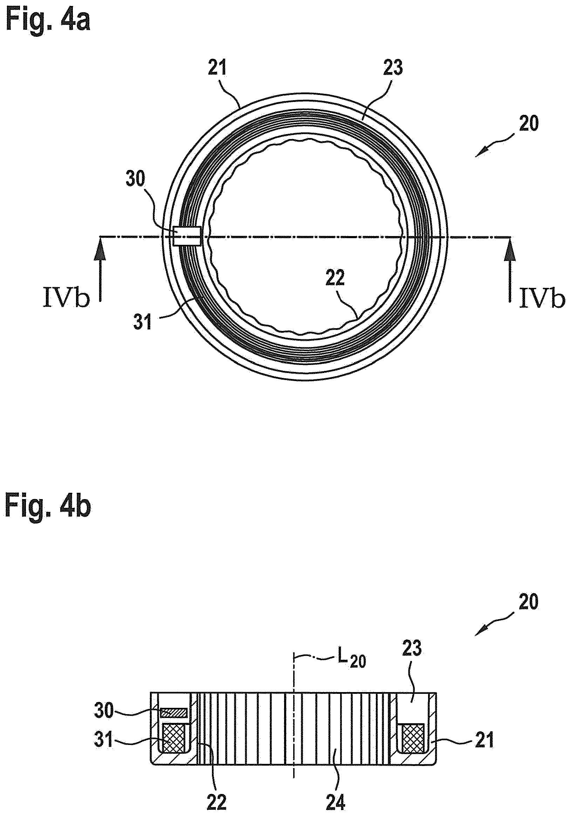

Wie in den Figuren 4a und 4b dargestellt ist wird ein RFID-Transponder 30 zusammen mit einer ringförmig in der Ausnehmung 23 umlaufenden Antenne 31 in der Ausnehmung 23 angeordnet. Dabei enthält der RFID-Transponder 30 auf einem Datenspeicher einen eindeutigen Identifikator in Form eines Codes, der es ermöglicht mittels eines Auslesegeräts ein Schaftwerkzeug zu identifizieren an dem das Identifikationselement angebracht ist.

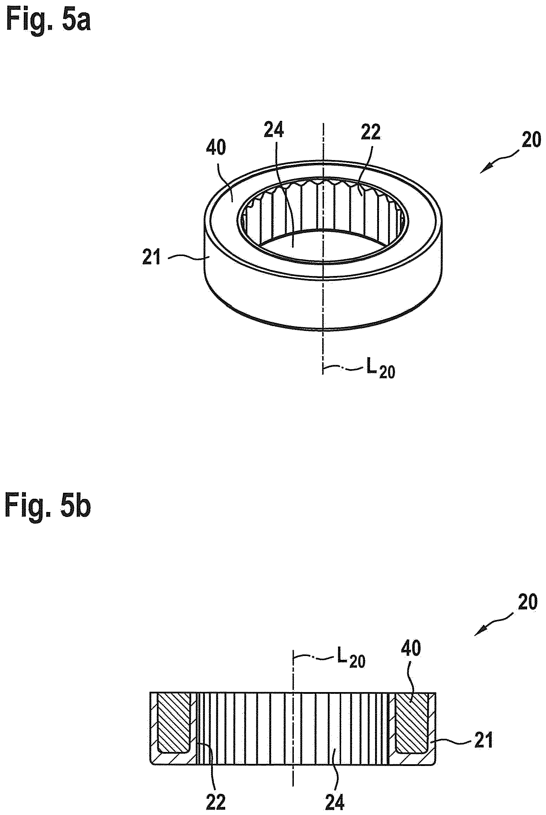

Die Figuren 5a und 5b zeigen, dass nach Einbringen des RFID-Transponders 30 und der Antenne 31 in die Ausnehmung 23, diese vollständig mit einem Füllmaterial 40 gefüllt wird, bei dem es sich im vorliegenden Ausführungsbeispiel um eine Polyurethanvergussmasse handelt.

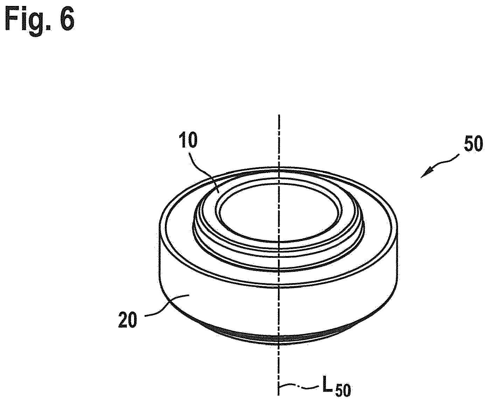

Der Außenring 20 und einer der Innenringe 10 werden zusammengebaut, indem der jeweilige Innenring 10 mit seinem Haltebereich 13 voran durch die Öffnung 24 des Außenrings 20 geschoben wird. Dies erfolgt so, dass der Anschlag 12 auf der in Figur 6 unten dargestellten Seite des Identifikationselements 20 zu liegen kommt und somit gemeinsam mit der Seite des Außenrings 20, welche aus seinem aus Glasfaser gefülltem LCP bestehenden Gehäuse besteht, eine Seite des Identifikationselements 50 bildet. Wird der Innenring gemäß den Figuren 1a und 1b verwendet, so sorgt der ringförmige Anschlag 12 dafür, dass diese Seite besonders flüssigkeitsdicht ist. Auf der anderen Seite des Identifikationselements 12 kommt der Haltebereich 13 benachbart zum Füllmaterial 40 auf dem Rand der Ausnehmung 23 zum Liegen. Der Innenring 10 und der Außenring 20 sind nun so angeordnet, dass ihre Längsachsen L₁₀, L₂₀ deckungsgleich mit der Längsachse L₅₀ des Identifikationselements 50 sind.

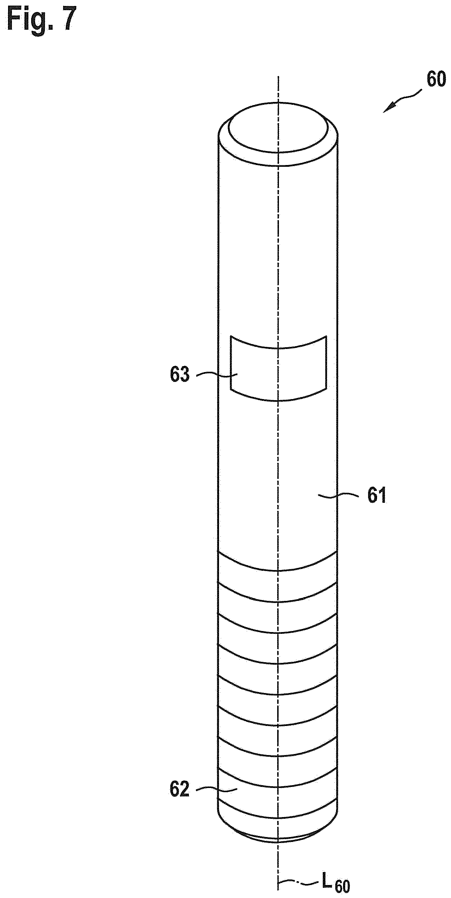

Ein herkömmliches Schaftwerkzeug 60 ist in Figur 7 dargestellt. Dieses weist einen Schaft 61 auf, der sich entlang der Längsachse L₆₀ des Schaftwerkzeugs 60 erstreckt und in einem Werkzeugkopf 62 endet. Oberhalb des Werkzeugkopfes 62 ist an dem Schaft 61 ein visuellen Marker 63 in Form eines 3D-Codes aufgebracht.

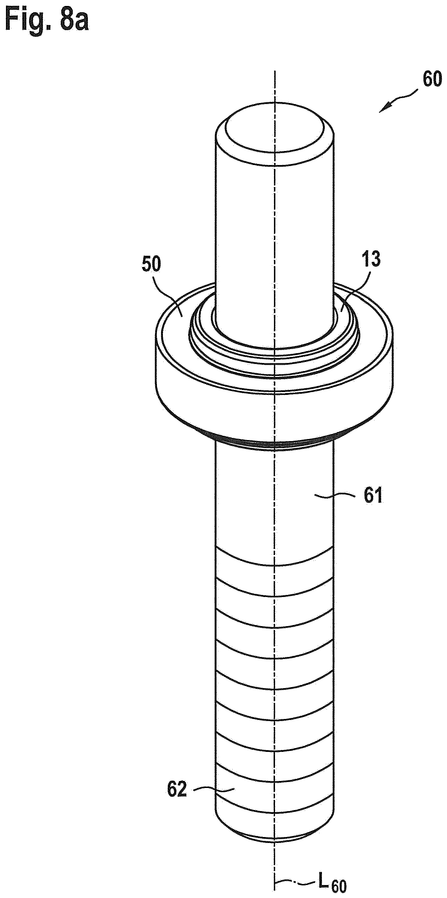

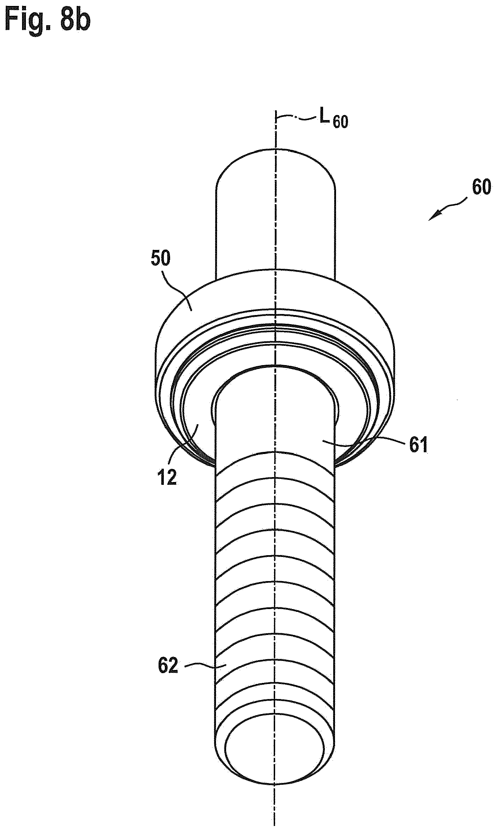

Ein Ausführungsbeispiel des erfindungsgemäßen Schaftwerkzeugs 60 ist in den Figuren 8a und 8b dargestellt. Dieses weist ebenfalls einen Schaft 61 auf, der sich entlang der Längsachse L₆₀ des Schaftwerkzeugs 60 erstreckt. Im vorliegenden Ausführungsbeispiel hat der Schaft 61 einen Außendurchmesser von 6 mm. Das Identifikationselement 50 kann deshalb so über den Schaft 61 geschoben werden, dass der Innenring 10 mit seinem Innendurchmesser von 6 mm den Schaft 61 verrutschsicher umschließt. Aufgrund der Elastizität des Innenrings 10 ist unter Krafteinwirkung ein Aufbringen und ein Entfernen des Identifikationselements 50 durch Verschieben des Identifikationselements 50 entlang des Schaftes 61 dennoch möglich. Um eine eindeutige Zuordnung zwischen dem Schaftwerkzeug 60 und seinem Identifikationselement 50 sicherzustellen, weisen beide visuelle Marker auf. Bei dem visuellen Marker 63 des Schaftwerkzeugs 60 handelt es sich dabei um den in Figur 7 dargestellten 3D-Code, der in der Darstellung in den Figuren 8a und 8b vom Identifikationselement 50 bedeckt wird. Dadurch schützt es den 3D-Code vor mechanischem Abrieb. Der Werkzeugkopf 62 des Schaftwerkzeugs 60 befindet sich in den Figuren 8a und 8b an seiner Unterseite und ist damit jenem Ende des Identifikationselements 50 zugewandt, dass vom Boden 25 des Außenrings 20 und dem Anschlag 12 des Innenrings 10 gebildet wird. Hierdurch wird verhindert, dass Kühlmittel und Schmiermittel, das im Betrieb des Schaftwerkzeugs 10 vom Werkzeugkopf nach oben spritzt, zwischen den Innenring 10 und den Außenring 20 gelangt oder sich in eventuellen Spalten des Füllmaterials 40 sammelt.

## Patentansprüche

1. Identifikationselement (50) für ein Schaftwerkzeug (60), aufweisend einen elastischen Innenring (10) und einen um den Innenring (10) herum angeordneten Außenring (20), welcher eine ringförmig in dem Außenring gebildete Ausnehmung (23) aufweist, wobei in der Ausnehmung (23) ein RFID-Transponder (30) angeordnet ist und der Innenring (10) an einem ersten Ende seines Außenmantels (11) einen ringförmigen Anschlag (12) aufweist, der von dem Außenmantel (11) vorspringt, **dadurch gekennzeichnet, dass** der Innenring (10) an einem zweiten Ende seines Außenmantels (11) einen ringförmigen Haltebereich (13) aufweist, der von dem Außenmantel (11) vorspringt, wobei der Haltebereich (13) weniger weit vorspringt, als der Anschlag (12).

2. Identifikationselement (50) nach Anspruch 1, **dadurch gekennzeichnet, dass** der Innenring (10) aus einem Material mit einem Elastizitätsmodul von maximal 1 GPa besteht.

3. Identifikationselement (50) nach Anspruch 1 oder 2, **dadurch gekennzeichnet, dass** der Innenring (10) einen Innendurchmesser von mindestens 6 mm aufweist.

4. Identifikationselement (50) nach einem der Ansprüche 1 bis 3, **dadurch gekennzeichnet, dass** ein Innenmantel (22) des Außenrings (20) zwischen dem Anschlag (12) und dem Haltebereich (13) angeordnet ist.

5. Identifikationselement (50) nach einem der Ansprüche 1 bis 4, **dadurch gekennzeichnet, dass** der Außenring (20) aus einem thermoplastischen Material besteht.

6. Identifikationselement (50) nach einem der Ansprüche 1 bis 5, **dadurch gekennzeichnet, dass** ein Innenmantel (22) des Außenrings (20) mehrere Vorsprünge aufweist.

7. Identifikationselement (50) nach einem der Ansprüche 1 bis 6, **dadurch gekennzeichnet, dass** der RFID-Transponder (30) eine ringförmige Antenne (31) aufweist, die in der Ausnehmung (23) angeordnet ist.

8. Identifikationselement (50) nach Anspruch 7, **dadurch gekennzeichnet, dass** eine Füllmasse (40) in der Ausnehmung (23) angeordnet ist, welche den RFID-Transponder (30) und die Antenne (31) umschließt.

9. Schaftwerkzeug (60), **dadurch gekennzeichnet, dass** es ein Identifikationselement (50) nach einem der Ansprüche 1 bis 8 aufweist, wobei der Innenring (10) des Identifikationselementes (50) einen Schaft (61) des Schaftwerkzeugs (60) umschließt.

10. Schaftwerkzeug (60) nach Anspruch 9, **dadurch gekennzeichnet, dass** der Innenring (10) eine visuelle Markierung (63) des Schafts (61) bedeckt.

11. Schaftwerkzeug (60) nach Anspruch 9 oder 10, **dadurch gekennzeichnet, dass** ein Anschlag (12) des Innenrings (10) auf einer einem Werkzeugkopf (62) zugewandten Seite des Identifikationselements (50) angeordnet ist.

12. Schaftwerkzeug (60) nach Anspruch 11, **dadurch gekennzeichnet, dass** der Anschlag (12) des Innenrings (10) eine visuelle Markierung (26) des Identifikationselements (50) bedeckt, welche auf dem Außenring (20) angebracht ist.

## Claims

1. Identification element (50) for a shank tool (60), having an elastic inner ring (10) and an outer ring (20) arranged around the inner ring (10), which has a recess (23) formed annularly in the outer ring, wherein an RFID transponder (30) is arranged in the recess (23) and the inner ring (10) has a annular stop (12) at a first end of its outer shell (11), said stop projecting from the outer shell (11), **characterised in that** the inner ring (10) has an annular retaining region (13) at a second end of its outer shell (11) projecting from the outer shell (11), wherein the retaining region (13) does not project as far as the stop (12).

2. Identification element (50) according to claim 1, **characterised in that** the inner ring (10) consists of a material having a modulus of elasticity of a maximum of 1 GPa.

3. Identification element (50) according to claim 1 or 2, **characterised in that** the inner ring (10) has an inner diameter of at least 6 mm.

4. Identification element (50) according to one of the claims 1 to 3, **characterised in that** an inner shell (22) of the outer ring (20) is arranged between the stop (12) and the retaining region (13).

5. Identification element (50) according to one of claims 1 to 4, **characterised in that** the outer ring (20) consists of a thermoplastic material.

6. Identification element (50) according to one of claims 1 to 5, **characterised in that** an inner shell (22) of the outer ring (20) has several projections.

7. Identification element (50) according to one of claims 1 to 6, **characterised in that** the RFID transponder (30) has an annular antenna (31) which is arranged in the recess (23).

8. Identification element (50) according to claim 7, **characterised in that** a filling compound (40) is arranged in the recess (23), which encloses the RFID transponder (30) and the antenna (31).

9. Shank tool (60), **characterised in that** it has an identification element (50) according to one of claims 1 to 8, wherein der inner ring (10) of the identification element (50) encloses a shank (61) of the shank tool (60).

10. Shank tool (60) according to claim 9, **characterised in that** the inner ring (10) covers a visual marking (63) of the shank (61).

11. Shank tool (60) according to claim 9 or 10, **characterised in that** a stop (12) of the inner ring (10) is arranged on a side of the identification element (50) facing a tool head (62).

12. Shank tool (60) according to claim 11, **characterised in that** the stop (12) of the inner ring (10) covers a visual marking (26) of the identification element (50), which is applied on the outer ring (20).

## Revendications

1. Élément d'identification (50) destiné à un outil à arbre (60), présentant une bague intérieure (10) élastique ainsi qu'une bague extérieure (20) qui est agencée autour de la bague intérieure (10) et qui présente un évidement (23) annulaire qui y est formé, un transpondeur RFID (30) étant agencé dans l'évidement (23) et la bague intérieure (10) présentant, sur une première extrémité de son enveloppe extérieure (11), une butée (12) annulaire faisant saillie par rapport à l'enveloppe extérieure (11) ; **caractérisé en ce que** la bague intérieure (10) présente, sur une deuxième extrémité de son enveloppe extérieure (11), une zone de retenue (13) annulaire faisant saillie par rapport à l'enveloppe extérieure (11), ladite zone de retenue (13) faisant moins fortement saillie que ladite butée (12).

2. Élément d'identification (50) selon la revendication 1, **caractérisé en ce que** la bague intérieure (10) se compose d'un matériau présentant un module d'élasticité maximal de 1 GPa.

3. Élément d'identification (50) selon la revendication 1 ou 2, **caractérisé en ce que** la bague intérieure (10) présente un diamètre intérieur d'au moins 6 mm.

4. Élément d'identification (50) selon l'une des revendications 1 à 3, **caractérisé en ce qu'**une enveloppe intérieure (22) de la bague extérieure (20) est agencée entre la butée (12) et la zone de retenue (13).

5. Élément d'identification (50) selon l'une des revendications 1 à 4, **caractérisé en ce que** la bague extérieure (20) se compose d'un matériau thermoplastique.

6. Élément d'identification (50) selon l'une des revendications 1 à 5, **caractérisé en ce qu'**une enveloppe intérieure (22) de la bague extérieure (20) présente plusieurs parties faisant saillie.

7. Élément d'identification (50) selon l'une des revendications 1 à 6, **caractérisé en ce que** le transpondeur RFID (30) présente une antenne (31) annulaire agencée dans l'évidement (23).

8. Élément d'identification (50) selon la revendication 7, **caractérisé en ce qu'**une masse de remplissage (40) est agencée dans l'évidement (23) et entoure le transpondeur RFID (30) et l'antenne (31).

9. Outil à arbre (60), **caractérisé en ce qu'**il présente un élément d'identification (50) selon l'une des revendications 1 à 8, la bague intérieure (10) dudit élément d'identification (50) entourant un arbre (61) de l'outil à arbre (60).

10. Outil à arbre (60) selon la revendication 9, **caractérisé en ce que** la bague intérieure (10) cache un marquage visuel (63) de l'arbre (61).

11. Outil à arbre (60) selon la revendication 9 ou 10, **caractérisé en ce qu'**une butée (12) de la bague intérieure (10) est agencée sur un côté de l'élément d'identification (50) qui est tourné vers la tête (62) de l'outil.

12. Outil à arbre (60) selon la revendication 11, **caractérisé en ce que** la butée (12) de la bague intérieure (10) cache un marquage visuel (26) de l'élément d'identification (50) qui est agencé sur la bague extérieure (20).
